(19) **Europäisches Patentamt**

**European Patent Office**

**Office européen des brevets**

(11) **EP 0 969 385 A2**

(12) **EUROPEAN PATENT APPLICATION**

(43) Date of publication:
05.01.2000 Bulletin 2000/01

(51) Int. Cl.⁷: **G06F 15/18**

(21) Application number: **99112586.5**

(22) Date of filing: **01.07.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **02.07.1998 JP 18718198**

(71) Applicant:
**YAMAHA HATSUDOKI KABUSHIKI KAISHA**
**Iwata-shi Shizuoka-ken, 438 (JP)**

(72) Inventors:
• **Hajime, Kita**
**Kawasaki-shi, Kanagawa-ken (JP)**

• **Takuaki, Shibata,**
**c/o Yamaha Hatsudoki K.K.**
**Iwata-shi, Shizuoka-ken (JP)**
• **Masashi, Yamaguchi,**
**c/o Yamaha Hatsudoki K.K.**
**Iwata-shi, Shizuoka-ken (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Evaluation method for a hereditary algorithm**

(57)     An evaluation method for a hereditary algorithm is disclosed in which the evaluation conditions of individuals are subdivided and the data for evaluation is classified.

[FIG. 15]

**Description**

This invention relates to a technical field of objectively evaluating individuals in a control method using hereditary algorithm.

Conventionally, the characteristics of a product such as a vehicle, a household electric appliance, etc. as the subject to be controlled have been determined, in development and engineering stages, to adapt to as wide a range of users as possible by taking into consideration additional factors such as the users' preferences and the environment in which the product is used. However, since the users have widely varied respective personalities of their own, it is impossible to provide characteristics that satisfy all the users. To solve this problem, a control method has so far been tried in which neural networks are used to estimate the users' preferences and the environment for use, and hereditary algorithm has been used to find characteristics that can satisfy the users.

In the hereditary algorithm constituted by simulating the process of natural evolution, a user generally subjectively evaluates individuals in the same generation, and hereditary manipulation is performed according to the evaluated values. However, in the case the hereditary algorithm is applied to the control of an engine for example in which the control results in a plural number of operation statuses, since the output varies widely depending on the input conditions, it is difficult to objectively compare individuals by simply giving one evaluation value to one individual. As a measure for this problem, it is possible to classify data for evaluation into subdivided evaluation regions and evaluate them as a whole. However, this evaluation method has had so far a problem. That is, for any evaluation region that does not have data for all the individuals, it is necessary to wait until all the data come up, or to manipulate to exclude that region from the subject of evaluation. This is inefficient in the evaluation of individuals and also has a problem of difficulty in making appropriate evaluation.

Therefore, it is an objective of the present invention to provide an evaluation method capable of solving the above-described problems encountered when evaluating individuals by applying the hereditary algorithm to the control which results in a plural number of operation statuses as with an engine, and making evaluation possible when data for all the individuals is not present in an evaluation region, and achieving efficient and objective evaluation with less number of evaluations.

According to the invention, this objective is solved by an evaluation method for a hereditary algorithm, the evaluation conditions of individuals are subdivided and that the data for evaluation is classified.

According to an embodiment of the invention, the evaluation method of the hereditary algorithm of this invention is characterized in that, when evaluating individuals in the hereditary algorithm in subjects to be controlled for which the control results turn up in a plural number of operation statuses, data for evaluation is classified into subdivided evaluation regions and that evaluation values of the individuals are objectively calculated.

Other preferred embodiments of the present invention are laid down in further dependent claims.

In the following, the present invention is explained in greater detail with respect to several embodiments thereof in conjunction with the accompanying drawings, wherein:

FIG. 1 shows the basic concept of the control method to which this invention is applied;
FIG. 2 is a chart for explaining the flow of process of the control method shown in FIG. 1;
FIG. 3 is a simplified explanatory drawing of a control device for executing the control method shown in FIG. 1 associated with an engine;
FIG. 4 shows the constitution of the control device shown in FIG. 3;
FIG. 5 is for explaining the process of the evaluation system shown in FIG. 4;
FIG. 6 is for explaining the process of the evaluation system shown in FIG. 4;
FIG. 7 is for explaining the process of the evaluation system shown in FIG. 4;
FIG. 8 is for explaining the process of the evaluation system shown in FIG. 4;
FIG. 9 is for explaining the process of the evolution-adaptation system shown in FIG. 4;
FIG. 10 is for explaining the process of the evolution-adaptation system shown in FIG. 4;
FIG. 11 is a flow chart showing an evolution example of a module using hereditary algorithm out of processes of the evolution-adaptation system shown in FIG. 4;
FIG. 12 is for explaining the process shown in FIG. 11;
FIG. 13 is for explaining the process shown in FIG. 11;
FIG. 14 is for explaining the process shown in FIG. 11;
FIG. 15 is a flow chart showing an embodiment of the evaluation method of hereditary algorithm of the invention;
FIG. 16 is for explaining the process shown in FIG. 15;
FIG. 17 is for explaining the process shown in FIG. 15;
FIG. 18 is for explaining the process shown in FIG. 15;
FIG. 19 is for explaining the process shown in FIG. 15;
FIG. 20 is a flow chart showing an example of applying the evaluation method of the invention to an engine; and

FIG. 21 is for explaining the evaluation method shown in FIG. 20.

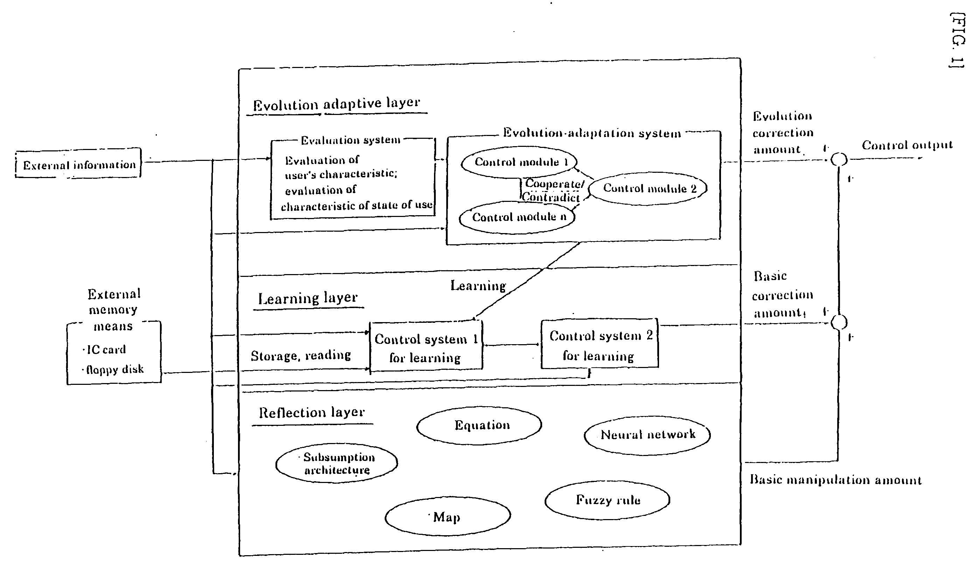

Embodiments of the invention will be hereinafter described in reference to the appended drawings. FIG. 1 shows the basic concept of the control method to which this invention is applied. According to the invention, the hereditary algorithm is applied to subjects to be controlled for which the control results turn up in a plural number of operation statuses as with engines, electric motors, air-conditioners, refrigerators, and robots. This control method comprises three control layers; a reflection layer, a learning layer, and an evolution adaptive layer. Information on a subject to be controlled (such as information on operation status) to be controlled is inputted from outside. Based on the input information, a basic manipulation amount is determined in the refection layer. A correction amount is determined in the learning layer and the evolution adaptive layer. From these basic manipulation amount and the correction amount, a final control amount is determined and outputted. Functions of the reflection layer, the learning layer, and the evolution adaptive layer will be described below.

The reflection layer is the one provided in advance with an equation of relationship between information on the subject to be controlled (hereinafter referred to as external information) and the manipulation amount for the external information in a control system of a form such as a map, fuzzy rule, neural network, or subsumption architecture, and when the external information is inputted, determines and outputs a basic manipulation amount relative to the external information from the control system. The subsumption architecture is publicly known as active type artificial intelligence for carrying out parallel processing.

The evolution adaptive layer comprises two control systems; an evaluation system and an evolution-adaptation system. The evaluation system receives input of information on the external information and the user's characteristics (such as preference, skill, state in use) and information on characteristics of use situation (such as change in the environment of use) and estimates the characteristics of the user of the subject to be controlled and the use situation from the external information and at the same time, performs evaluation during the evolution process in the evolution-adaptation system based on the characteristics of the user and the use situation.

The evolution-adaptation system is provided with a plural number of control modules for correcting the basic manipulation amount determined in the reflection layer to adapt to the characteristics of the user and the use situation. The system evolves the control module in a hereditary manner according to the determination with the evaluation system, and acquires at least one currently optimum control module. After acquiring the optimum control module, the evolution-adaptation system fixes the control module to the optimum one and outputs an evolution correction value for correcting the basic manipulation amount outputted from the reflection layer.

The learning layer is provided with two control systems interchangeable between learning and execution. While a control is being executed in the control system for execution, learning is carried out in the control system for learning for both of the input-output relation concerning the evolved optimum control module of the evolution adaptive layer and the input-output relation of the control system for execution of the learning layer. When the learning is over in the control system for learning, the control system which is executing the control and the post-learning control system replace each other, a control with the control module acquired from the learning result is started in the post-learning control system, and the control system which has been executing the control starts functioning for learning.

The evolution adaptive layer, after making the learning layer learn the information on the optimum control module, returns its output to zero, operates at constant time intervals, evaluates the user's preference and use environment, and evolve the control module. When the evaluation added with the output of the evolution adaptive layer becomes superior to the evaluation not added with the output of the evolution adaptive layer, again makes the learning layer learn the information on the optimum control module.

Here, it is arranged that the information on the control module finished with learning in the learning layer is stored to be read in external memory means such as an IC card and floppy disk, a user can read as required the information on the optimum control module in the past from the external memory means, and a basic correction amount is outputted with the learning layer.

With the functions of both of the layers described above, the control output with this control method changes momentarily so that the subject to be controlled to be controlled adapts to the characteristics of the user and the use environment. As a result, the action characteristics of the subject to be controlled momentarily change to adapt to the characteristics of the user and the use situation. With this control method, the characteristics of the subject to be controlled keep on evolving to adapt to the characteristics of the user and the use situation.

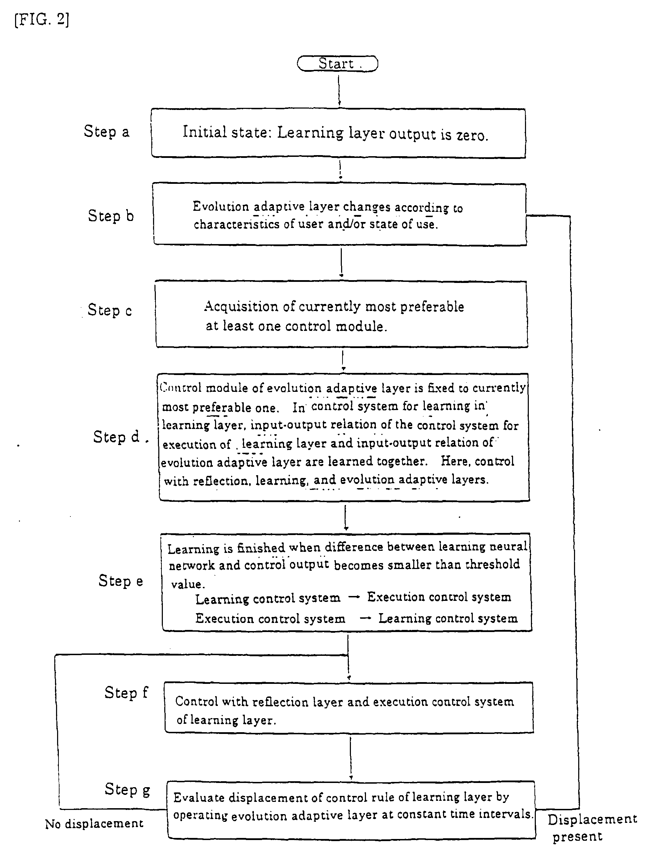

FIG. 2 is a chart for explaining the flow of process of the control method shown in FIG. 1. In the initial state, output from the learning layer is zero (step (a)). Therefore, immediately after the start of use of the subject to be controlled, the subject to be controlled is controlled only with the basic manipulation amount from the reflection layer. When the use of the subject to be controlled is started, the evolution adaptive layer evaluates the characteristics of the user and/or use situation and evolves the control module according to the evaluation values (step (b)). The evolution adaptive layer acquires a currently most preferable control module by hereditarily evolving respective modules (step (c)).

The evolution adaptive layer fixes (locks) its control module to the most preferable control module acquired in the step (c), outputs an evolution system correction value based on the control module, and corrects the basic manipulation amount outputted from the reflection layer. In the learning layer, the input-output relation of the evolution adaptive layer at the time the evolution adaptive layer is fixed to the most preferable module and the input-output relation of the control system for execution of the learning layer are put together with the control system for learning, and learning is carried out. Incidentally, while the output of the control system for execution of the learning layer in the initial state is zero, after the learning, the basic manipulation amount from the reflection layer is corrected with the basic correction amount from the learning layer and with the evolution correction amount from the evolution adaptive layer (step (d)).

When the difference between the value of the basic manipulation amount from the reflection layer plus the output of the control system for learning in the learning layer and the actual control output (basic manipulation amount + basic correction amount + evolution correction amount) becomes smaller than a threshold value, the control system in the learning layer finishes the learning, the control system for learning and the control system for execution replace each other, the control system that has finished learning serves as one for execution, and the control system that has executed the control serves as one for learning (step (e)). In this way, control is performed with the reflection layer and the learning layer (step (f)).

The evolution adaptive layer, after making the learning layer learn the information on the optimum control module, works at constant time intervals to evaluate the time-wise displacement of the control rule of the learning layer (step (g)). In concrete terms, when no improvement is seen in the maximum adaptation degree in the initial generation when the control module of the evolution adaptive layer is made to evolve in hereditary manner, it is deemed that no displacement in the control rule of the control layer exists, the process goes to the step (f), control is continued with the reflection layer and the learning layer. When improvement is found in the maximum adaptation degree, the process moves on to the step (b) and a new optimum control module is acquired in the evolution adaptive layer.

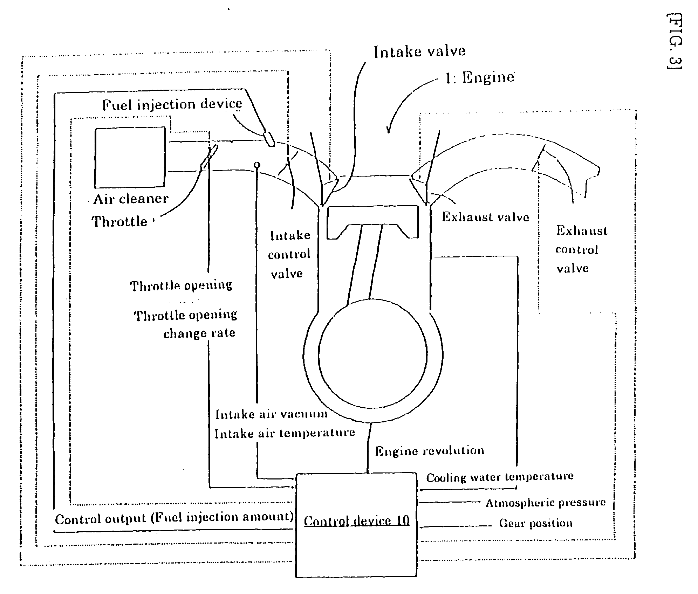

The above-described control method will be described more in detail for the case the subject to be controlled is an engine for vehicles as an example. FIG. 3 is a simplified explanatory drawing of a control device 10 for executing the control method shown in FIG. 1 associated with an engine 1. The control device 10 receives input data of the engine revolution, intake air vacuum, throttle opening degree, rate of change in throttle opening degree, atmospheric pressure, intake air temperature, cooling water temperature, gear shift position (gear position), etc. Based on these pieces of information, control signals are issued to the fuel injection device, intake air control valve, intake valve, exhaust valve, and exhaust control valve to control the engine.

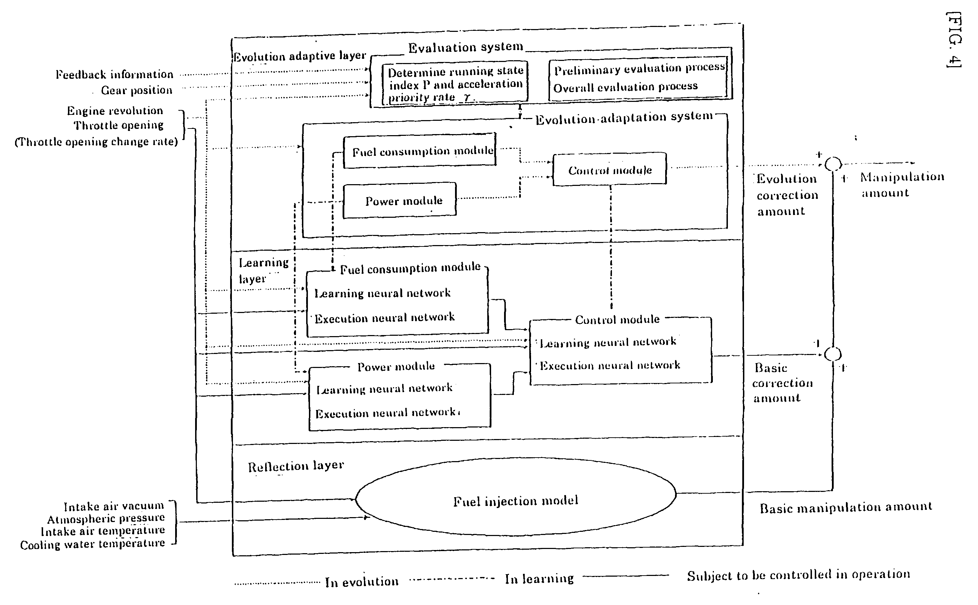

FIG. 4 shows the constitution of the control device shown in FIG. 3. This control device 10 comprises the above-described three layers; the reflection layer, learning layer, and evolution adaptive layer. The reflection layer receives the signals of the engine revolution, intake air vacuum, throttle opening degree, rate of change in the throttle opening degree, atmospheric pressure, intake air temperature, and cooling water temperature. Based on these signals, a control manipulation amount of the fuel injection rate is determined from a predetermined fuel injection model, and outputted.

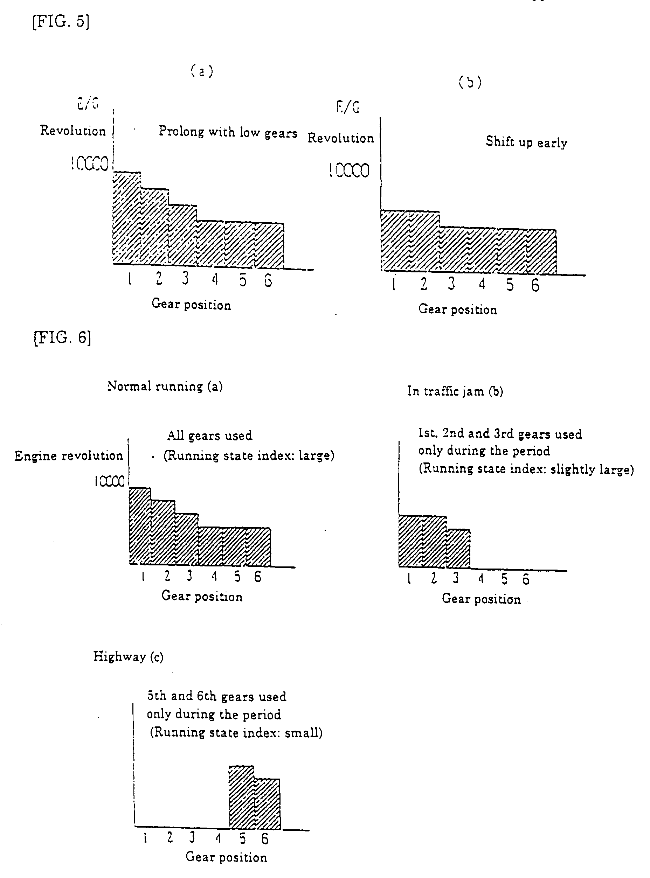

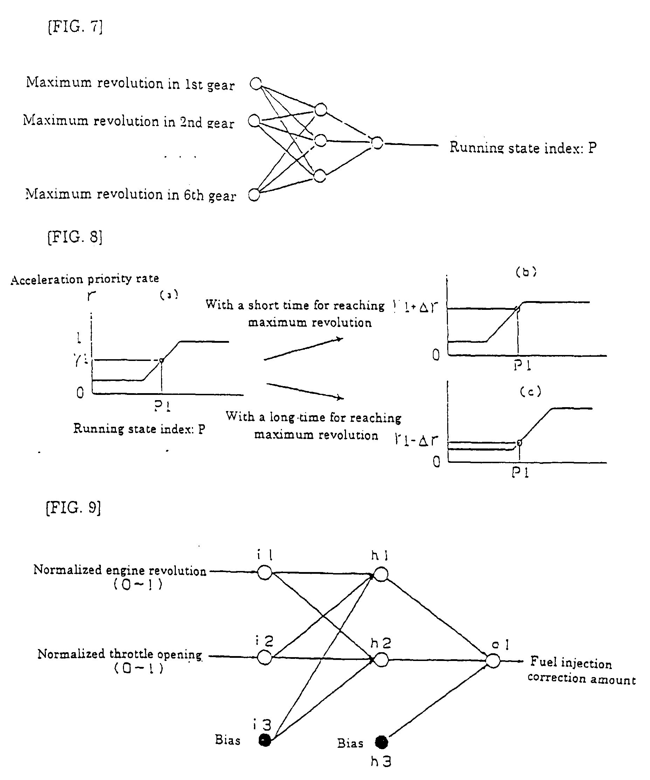

The evolution adaptive layer comprises an evaluation system and an evolution-adaptation system. The evaluation system is provided with a neural network (See FIG. 7) which has learned the relation between the distribution pattern of maximum revolutions in respective gear positions within a certain period of time (See FIGs. 5 and 6) and the running state index P, receives input of a gear position signal and an engine revolution signal, determines a running state index P from the input information using the neural network. For example, a user who prefers sporty running tends to run the engine to a higher revolution in a lower gear position. Therefore, the revolution distribution patter becomes as shown in FIG. 5(a). A user who prefers a mild running tends to shift up the gear earlier in comparison with the sporty user. As a result, the revolution distribution pattern becomes as shown in FIG. 5(b). Therefore, when the neural network shown in FIG. 7 is made to learn in advance so that the running state index P takes a great value when the revolution distribution pattern is as shown in FIG. 5(a) and that the running state index P takes a small value when the revolution distribution pattern is as shown in FIG. 5(b), the running state index P obtained from the neural network becomes greater as the preference of the user for running is more sporty, and becomes smaller as the preference of the user for running is milder. In this way, the preference of the user is reflected on the running state index.

Here, learning with the neural network may be set as follows: As shown in FIG. 6(a), when all the gears from the first to sixth speeds are used within a certain period of time, the value of the running state index P becomes great: as shown in FIG. 6b), when lower gears only are used, the value of the running state index P becomes slightly great; and as shown in FIG. 6(c), when higher gears only are used, the value of the running state index P becomes small. With such a setting, the vehicle will use all the gears in a normal run, lower gear only in a jammed traffic, and higher gears only in a high speed run. Therefore, the following estimations based on the running state index P are possible: the case of FIG. 6(a) represents a normal run, FIG. 6(b) a run in a traffic jam, and FIG. 6(c) a run on a highway.

The evaluation system estimates the current running state from the running state index P and also determines whether the user prefers to attach importance to fuel economy performance or to acceleration performance, and determines an acceleration priority rate $\gamma$. The acceleration priority rate $\gamma$ is set as shown in FIG. 8 approximately in proportion to the running state index P. When the time before reaching the maximum revolution is short, the acceleration

priority rate $\gamma$ is great and when the time before reaching the maximum revolution is long, the acceleration priority rate $\gamma$ is small.

The evolution-adaptation system is provided with an inferior module comprising a fuel economy module intended for acquiring a fuel injection control rule which brings about the best fuel economy and a power module intended for acquiring a fuel injection control rule which brings about the maximum output, and with a control module intended for acquiring output ratio of the fuel economy module versus the power module. Each of the above-described modules is constituted with hierarchy type neural network of two inputs and one output as shown in FIG. 9. The fuel economy module and the power module receive the input of normalized engine revolution and normalized throttle opening degree, and output a primary output value of the evolution correction amount. The control module receives the input of normalized throttle opening and normalized throttle opening change rate, and determines the final output value of the evolution correction amount by outputting the output ratio of the inferior modules (the fuel economy module and the power module).

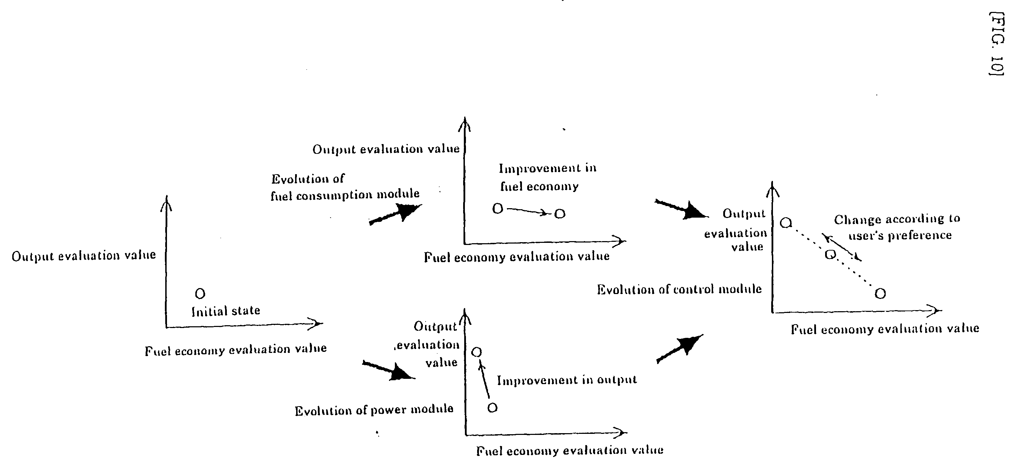

The fuel economy module and the power module respectively make the coupling factors of respective neural networks evolve autonomously in succession irrespective of operation state and user's preference as shown in FIG. 10 using hereditary algorithm to acquire an air-fuel ratio correction amount so that an air-fuel ratio for the best fuel economy and an air-fuel ratio for the maximum output are acquired. In contrast to this, the control module makes the coupling factor of its neural network evolve autonomously using the hereditary algorithm to acquire an output ratio of the fuel economy module and the power module that meets the user's preference between the best fuel economy air-fuel ratio and the maximum output air-fuel ratio.

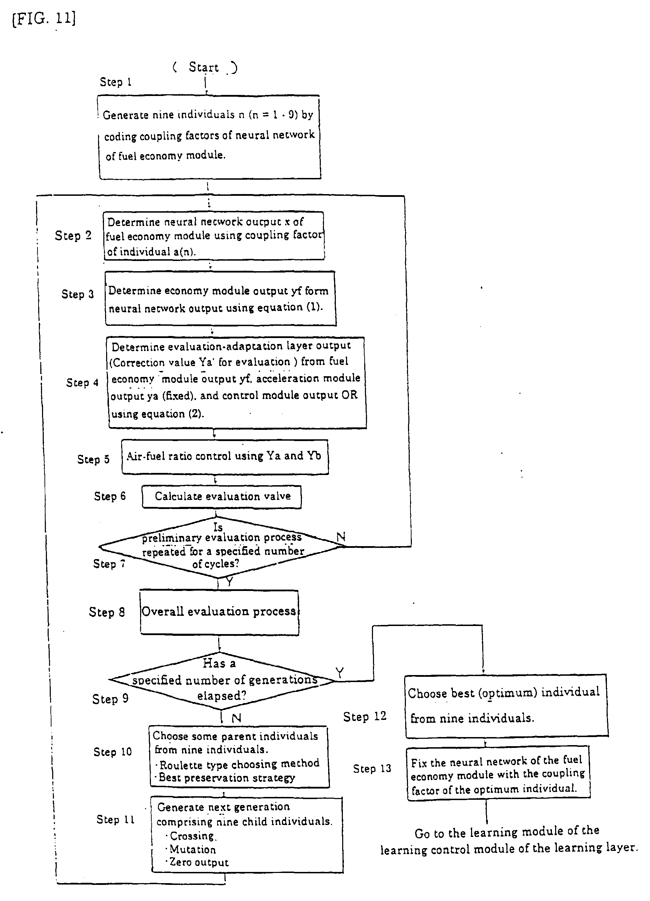

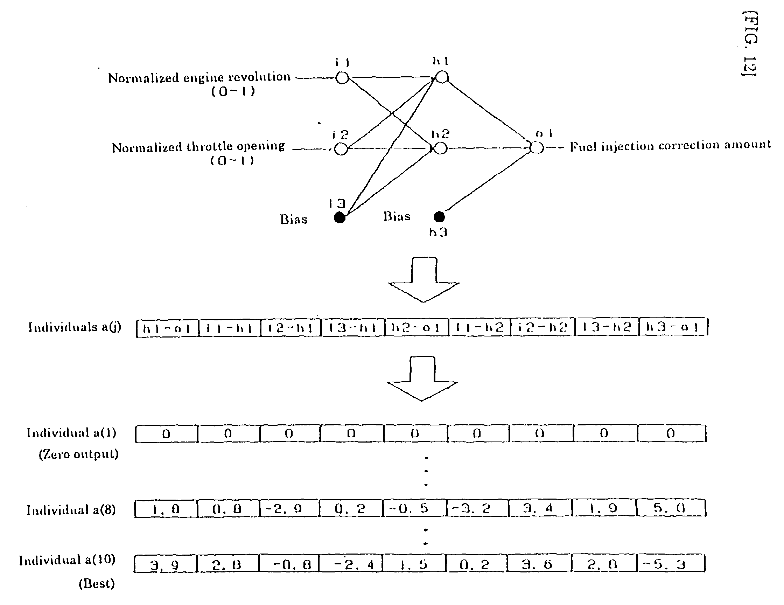

Next, the evolution of a module with the hereditary algorithm will be described. FIG. 11 is a flow chart for explaining an example of the evolution of the fuel economy module. FIG. 12 is for explaining the process shown in FIG. 11. First, coupling factors of neural networks constituting the fuel economy module are coded as genes to generate a first generation of a plural number (nine in this embodiment) of individuals a(j) (step 1). Here, it is possible to keep the versatility of the group of individuals in the process of evolution even if there is a limit in the number of individuals while maintaining the pre-evolution performance by including in the group of individuals one individual that can make the output of the evolution adaptive layer zero.

Next, for one individual a(1) for example in one of the individuals a(j) generated in the step 1, a neural network output x corresponding to an actual input information (engine revolution and throttle opening) is determined using the neural network of the fuel economy module (step 2). The output is further converted linearly using the equation below to determine an output yf(1) of the fuel economy module for the individual a(1).

$$yf(n) = 2 \times Gx(n) \text{ --- } G$$

where x(n) is the output of the neural network in the fuel economy module, G is the output gain of the evolution adaptive layer, and n is any individual. When the output x of the neural network is linearly converted and used in this way, the output yf(1) from the fuel economy module does not become an extremely great value, the evolution as a whole proceeds little by little, and the behavior of the engine does not vary extremely due to evaluation and evolution.

After the output yf(1) of the fuel economy module for the individual a(1) is determined, the output of the evolution adaptive layer (correction value Ya(n) for evaluation) is determined with the equation shown below using the power module output ya and the control module output OR (step 4).

$$Ya(n) = OR \times ya + (1 \text{ --- } OR) \times yf$$

Incidentally, the coupling factors of the power module and the control module are fixed during the evolution process of the fuel economy module. As shown in the equation above, the control module output OR is the ratio of the fuel economy module output yf to the power module output yf. Therefore, when the control module output OR is 1, the output of the evolution adaptive layer becomes the power module output, and when the output OR is 0, the output of the evolution adaptive layer becomes the fuel economy module output.

Next, the output Ya(1) of the evolution adaptive layer for the individual a(1) is actually issued from the evolution adaptive layer. The correction value Ya(1) for evaluation and the basic correction value Yb from the learning layer are added to the basic manipulation amount from the reflection layer. The control output corrected with the correction value of Ya(1) + Yb is used to operate the engine (step 5). While actually performing the control using the individual a(1), information on the control result is fed back in the evaluation system of the evolution adaptive layer to determine the evaluation value (here, fuel consumption amount) for the individual a(1) is determined (step 6).

When the above-described steps 1 through 6 is assumed to be one cycle of preliminary evaluation process including the calculation of evaluation values for all the nine individuals a(1) through a(9) generated in the step 1, the preliminary process is repeated for a predetermined number of cycles (step 7). After the evaluation values for all the individuals are calculated for the predetermined number of cycles, the process goes to the overall evaluation of each individual (step 8). In the overall evaluation, an overall evaluation value is calculated from the total travel distance during the evaluation value calculation cycles divided by the total of all the evaluation values (here, total fuel consumption amount). Based on the overall evaluation value, adaptation degree of each individual is evaluated.

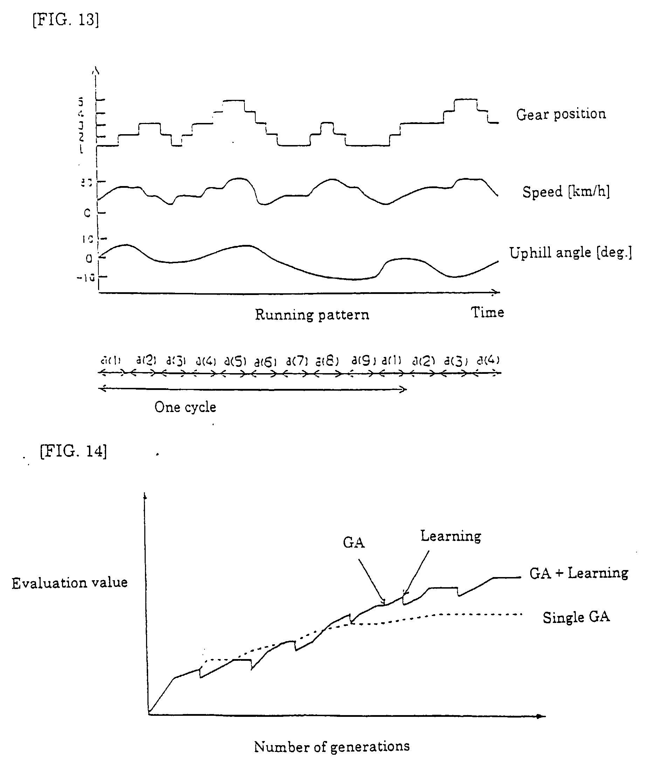

As shown in FIG. 13, it is possible to evaluate respective individual fairly under the almost uniform conditions even under momentarily changing running conditions by operating respective individuals in a quasi parallel manner by time division and by performing the control using the individuals for a specified number of times by turns, and to perform an on-line control, namely to evaluate the vehicle while it is running.

After the overall evaluation process is over, it is determined if the generation to which the individuals belong is the final (step 9). If not, parent individuals are selected (step 10). This selection uses a roulette type of method to select a certain number of parent individuals with probabilities in proportion to the adaptation degrees of respective individuals. Here, since an individual of a high evaluation might be destroyed if change of generation is applied too strictly, a preservation strategy is also used to leave a best individual (individual of the highest evaluation) unconditionally for the next generation.

When the selection of the parent individuals is over, the selected individuals as parents are crossed to generate a second generation comprising nine child individuals (step 11). For the crossing between individuals, known methods such as one point crossing, two point crossing, and normal distribution crossing are used. Values (coupling degrees) of genes are randomly changed with a certain probability to cause mutation of genes for the nine individuals generated. Here, it is arranged that one individual that is capable of making the output of the evaluation-adaptation layer zero is included as one of the nine child individuals.

After the second generation is generated with the above-described process, the preliminary evaluation process from the step 2 is repeated. The process is repeated until the generated generation becomes a predetermined final generation. As a result, the child individuals constituting each generation evolve according to the evaluation with the evaluation system, namely in the case of the fuel economy module to acquire the fuel injection rule for the best fuel economy. In the case it is determined in the step 9 that the final generation is reached, an individual of a highest degree of adaptation (most suitable individual) is selected from the nine child individuals in the generation (step 12). The coupling factor of the neural network of the fuel economy module is fixed with the gene constituting the most suitable individual (step 13). The process then goes to the learning for the learning control module of the learning layer.

In the evolution process of the power module and the control module too, an evolution process similar to that of the fuel economy module described above is performed. However, the overall evaluation value for each individual in the power module is calculated as the average engine revolution during the evaluation value calculation cycle divided by the average throttle opening degree. As a result, the child individuals constituting respective generations in the process of evolution of the power module evolve along the evaluation of the evaluation system, namely so as to acquire a fuel injection control rule that provides a best output. The overall evaluation value CNT for each individual in the control module is expressed with the equation below, assuming the fuel economy evaluation value during the evaluation value calculation cycle to be FC, the response evaluation value to be RP, the acceleration priority rate to be $\gamma$, the reference fuel economy evaluation value to be FCbase, and the reference response evaluation value to be RPbase.

$$CNT = (1 - \gamma) \times Scale \times (FC - Fcbase)/Fcbase + \gamma \times (RP - RPbase)/RPbase$$

where Scale is a factor for keeping balance between the fuel economy evaluation value and the response evaluation value. The fuel economy evaluation value FC is calculated similarly to the overall evaluation value in the fuel economy module. Concerning the response evaluation value RP, if change in the throttle opening degree greater than a threshold value continues for a predetermined period of time, it is deemed to be an acceleration operation. The change in the speed at that time is divided by the rate of change in the throttle opening degree. The result is made the average value calculated for each acceleration within the period of time of the specified evaluation value calculation cycle.

As described above, as the fuel economy evaluation value and the response evaluation value are evaluated in accordance with the acceleration priority rate $\gamma$ determined on the basis of the user's preference, the control module evolves to acquire an output ratio of the fuel economy module and the power module commensurate with the operation state in accordance with the user's preference.

Next, the learning layer will be explained. The learning layer as shown in FIG. 4 is provided with control module groups corresponding in types to the control modules of the evolution adaptive layer. Each control module group comprises a neural network for learning and a neural network for execution. The control module in the learning layer learns the input-output relation of the evolution adaptive layer with its neural network for learning every time the corresponding control module of the evolution adaptive layer evolves by a specified number of generations together with the input-output relation of the neural network functioning as one for execution of the learning layer.

The above-described learning is finished when the difference between the output of the learning neural network in the process of learning and the control output becomes smaller than a threshold value. After that, the neural network for learning becomes the one for execution and the neural network originally for the control becomes the one for learning. This learning is performed as described above every time the evolution process for the control module in the evolution adaptive layer is performed for a specified number of generations. Therefore, learning is performed every time the evolution process is performed for a specified number of generations during the period from the start of an evolution process for one control module to the convergence of the evolution. In this way, by repeating evolution and learning by turns for each control module, as shown in FIG. 14, it is possible to make the evolution proceed faster as the evaluation values are improved faster than the case in which evolution is made with the evolution process only without causing the learning to occur.

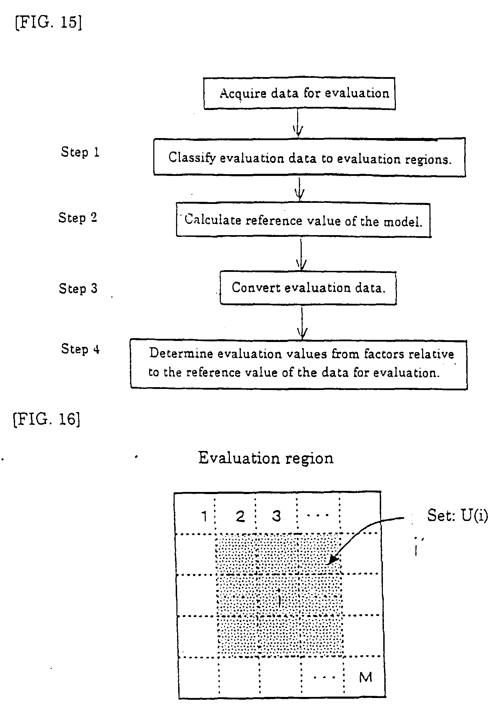

Next, the on-line evaluation method of the hereditary algorithm of the invention will be explained. FIG. 15 is a flow chart showing a basic concept as an embodiment. FIG. 16 is for explaining the evaluation region.

First, data for evaluating the individuals (j) are acquired, the acquired evaluation data are classified into subdivided evaluation regions (i) (FIG. 16) (step 1). The k-th data in the region (i) is assumed to be $f(i, j, k)$. Incidentally, while in this example the evaluation regions for classifying the evaluation data are represented in a two-dimensional table, the evaluation data may also be subdivided using evaluation conditions (parameters) into regions in two-dimensional or three-dimensional regions.

Next, in the step 2, a reference value of the model is calculated for each evaluation region, and the reference value is the average value of the data included in the evaluation region. Here, to improve the accuracy of the average value without increasing the number of individuals used for calculating the average value, the average value of the evaluation data contained in an area including the outskirts of an evaluation region is used as the reference value for the evaluation region (i). That is to say, the average value for the hatched region i' (set U(i)) including the outskirts of the region (i) in FIG. 16 is used as the average value for the region (i), which is expressed with the equation below.

$$f(i) = \frac{\sum_{i' \in U(i)} \sum_{j} \sum_{k} f(i',j,k)}{|\{f(i',j,k)|i' \in U(i)\}|} = \frac{\sum_{i' \in U(i)} \sum_{j} \sum_{k} f(i',j,k)}{N(i')} \qquad \text{[Equation 1]}$$

where $f(i', j, k)$ represents data in the region i' ($i' \in U(i)$), individual j, and observation k. $N(i')$ is the total number of data in the set U(i).

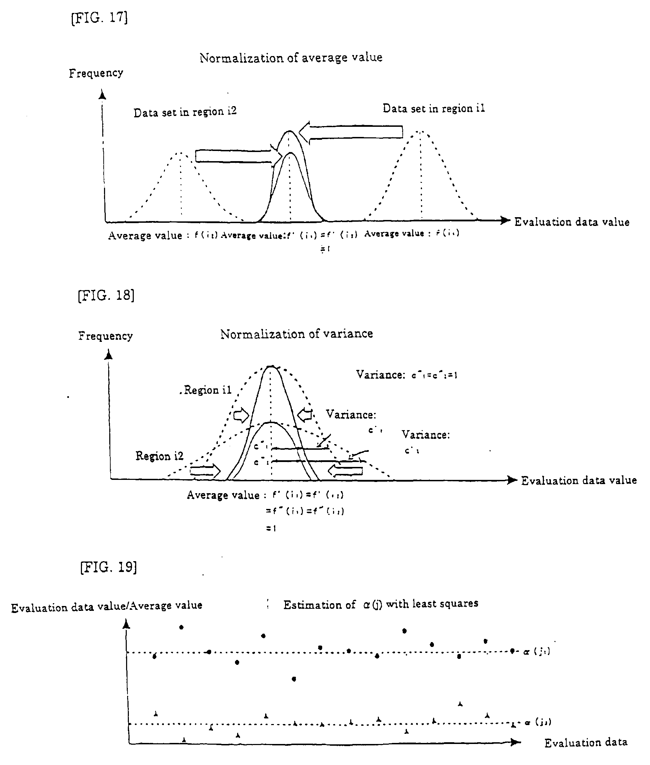

Next in the step 3, to equalize the rate of contribution to the evaluation value of evaluation regions, the evaluation data are converted so that the average value and the variance become equal from one evaluation region to another. This process is applied as shown in FIGs. 17 and 18; when the average value and the variance in one evaluation region are different from those in another, they are normalized so that the contribution rates of the evaluation values (estimated by the least squares method to be described later) of the respective evaluation regions become equal to each other.

First, to normalize the average value, using the equation (1), data are converted to $f(i, j, k)$ according to the equation (2) (See FIG. 17).

$$f'(i, j, k) = \frac{f(i,j,k)}{f(i)} \qquad \text{[Equation 2]}$$

Then, the variance is normalized. Data conversion without changing the average value is expressed with the equation 3 using (b) as the conversion factor.

$$f''(i, j, k) = f'(i, j, k) + \{f'(i, j, k) - f'(i)\}b \doteqdot f'(i, j, k) + \{f'(i, j, k) - 1\}b \qquad \text{[Equation 3]}$$

where $f(i)$ is an average value in the region i after the data conversion for normalizing the average value and expressed with the equation 4 with the number of data in the region i as $N(i)$.

$$f'(i) = \sum_{j} \sum_{k} f'(i, j, k)/N(i) \doteqdot 1 \qquad \text{[Equation 4]}$$

The variance c'' after the data conversion is expressed with the equation 5.

7

$$c''=\frac{\sum_j \sum_k \{f''(i,j,k)-f''(i)\}^2}{N(i)} \fallingdotseq \frac{\sum_j \sum_k \{f''(i,j,k)-1\}^2}{N(i)} \qquad (f''(i)=f'(i)\fallingdotseq 1)$$ [Equation 5]

where f''(i) is an average value in the region i after the data conversion for normalizing the variance and is expressed with the equation 6, and is expressed with the equation 7 assuming that the variance to be normalized is 1.

$$f''(i)=\sum_j \sum_k f''(i,j,k)/N(i)$$ [Equation 6]

$$=f'(i)$$

$$\frac{\sum_j \sum_k \{f''(i,j,k)-1\}^2}{N(i)}=1$$ [Equation 7]

$$\frac{\sum_j \sum_k [f'(i,j,k)+\{f'(i,j,k)-1\}b-1]^2}{N(i)}=1$$

The equation 7, when the variance before the data conversion c' is used, is expressed with the equation 8, where b is a conversion factor.

$$c'(1+b)^2=1$$ [Equation 8]

$$b=\frac{1}{\sqrt{c'}}-1 \qquad (\ c'=\frac{\sum_j \sum_k \{f'(l,j,k)-1\}^2}{N(i)}\ )$$

When the equation 3 is written in another form based on the above description, the evaluation data is finally converted into the equation 9 (See FIG. 18).

$$f''(i,j,k)=f'(i,j,k)+\{f'(i,j,k)-1\}(\frac{1}{\sqrt{c'}}-1)$$ [Equation 9]

Next in the step 4, evaluation values are determined from the factors relative to the reference value of the evaluation data. In order that, the evaluation data in the respective evaluation regions of the individuals are made into models by multiplying the reference value f' by the factors $\alpha$ (i) as shown in the equation (10).

$$f''(i,j)=\alpha(j)f''(i)+\varepsilon(i,j,k)$$ [Equation 10]

where $\varepsilon$ (i, j, k) is the remainder.
Next, factors $\alpha$ (j) are estimated from the data f'(i, j) for the individuals (j) using the least squares method so that the sum of the squares of the remainders shown in the equation 11 is minimized (See FIG. 19).

[Equation 11]

$$\min_{\alpha(j)} \sum_i \sum_k \varepsilon(i,j,k)^2$$

However, when the evaluation value F(j) of the individual (j) is given by the weighted sum of the evaluation data $\alpha$ (j)f'(i) in each region, the evaluation value F(j) is expressed with the equation 12:

$$F(j)=\sum_i N(i)\alpha(j)f''(i)=\alpha(j)\sum_i N(i) \qquad \text{[Equation 12]}$$

As is clear from the equation 12, since the comparison of F(j) is simply the same as the comparison of $\alpha$ (j), the $\alpha$ (j) may be used as the evaluation value. It is determined that the greater the $\alpha$ (j), the higher the evaluation.

Incidentally, while the evaluation data are converted in the above-described embodiment so that both of the average value and the variance are equal from one evaluation region to another, the data may also be converted so that either the average value or the variance is equal.

While the average value in the above embodiment is calculated using also the data for evaluation contained in the outskirts of the region in question, conversion of data for evaluation that will result in that the average value and/or variance is the same from one evaluation region to another may be made using the data contained in the outskirts of the region. This will be explained below.

The average value for the hatched region i' including the outskirts of the region (i) is assumed to be the average value for the region (i) which is expressed with the equation 13.

$$f(i)=\frac{\sum\limits_{i'\in U(i)}\sum\limits_j\sum\limits_k f(i',j,k)}{|\{f(i',j,k)|i'\in U(i)\}|}=\frac{\sum\limits_{i'\in U(i)}\sum\limits_j\sum\limits_k f(i',j,k)}{N(i')} \qquad \text{[Equation 13]}$$

where f(i', j, k) represents data in the region i' (i' $\in$ U(i)), individual j, and observation k. N(i') is the total number of data in the set U(i).

First, to normalize the average value, respective data are converted to f(i', j, k) using the equation 13 and according to the equation 14.

$$f'(i',j,k)=\frac{f(i',j,k)}{f(i)} \qquad \text{[Equation 14]}$$

When the region (i) is noted, data contained in the region i' are converted with the equation 2.

Furthermore, the variance is normalized. The data conversion without changing the average value is expressed with the equation 15 with the conversion factor of (b).

$$\begin{aligned}f''(i',j,k)&=f'(i',j,k)+\{f'(i',j,k)-f'(i)\}b\\&=f'(i',j,k)+\{f'(i',j,k)-1\}b\end{aligned} \qquad \text{[Equation 15]}$$

where f(i) is the average value in the region i' after the data conversion for normalizing the average value, and is expressed with the equation 16.

$$f'(i)=\frac{\displaystyle\sum_{i'\in U(i)}\sum_{j}\sum_{k}f'(i',j,k)}{|\{f(i',j,k)|i'\in U(i)\}|}=\frac{\displaystyle\sum_{i'\in U(i)}\sum_{j}\sum_{k}f'(i',j,k)}{N(i')} \qquad \text{[Equation 16]}$$

$$=1$$

The variance c" after the data conversion is expressed with the equation 17.

$$c''=\frac{\displaystyle\sum_{j}\sum_{k}\{f''(i',j,k)-f''(i)\}^2}{N(i')} \qquad \text{[Equation 17]}$$

$$=\frac{\displaystyle\sum_{j}\sum_{k}\{f''(i',j,k)-1\}^2}{N(i')} \qquad (f''(i)=f'(i)=1)$$

where f'(i) is the average value in the region i' after the data conversion for normalizing the variance, is expressed with the equation 18 and expressed with the equation 19 assuming that the variance to be normalized is 1.

$$f''(i)=\frac{\displaystyle\sum_{i'\in U(i)}\sum_{j}\sum_{k}f''(i',j,k)}{|\{f(i',j,k)|i'\in U(i)\}|}=\frac{\displaystyle\sum_{i'\in U(i)}\sum_{j}\sum_{k}f''(i',j,k)}{N(i')} \qquad \text{[Equation 18]}$$

$$=1$$

$$\frac{\displaystyle\sum_{j}\sum_{k}\{f''(i',j,k)-1\}^2}{N(i')}=1 \qquad \text{[Equation 19]}$$

$$\frac{\displaystyle\sum_{j}\sum_{k}[f'(i',j,k)+\{f'(i',j,k)-1\}b-1]^2}{N(i')}=1$$

The equation 19, if the variance c' before the data conversion is used, is expressed with the equation 20.

$$c'(1+b)^2=1 \qquad \text{[Equation 20]}$$

$$b=\frac{1}{\sqrt{c'}}-1 \qquad (\text{where } c'=\frac{\displaystyle\sum_{j}\sum_{k}\{f'(i',j,k)-1\}^2}{N(i')} )$$

When the equation 15 is rewritten from the above, the evaluation data is finally converted with the equation 21.

$$f''(i',j,k)=f'(i',j,k)+\{f'(i',j,k)-1\}(\frac{1}{\sqrt{c'}}-1) \qquad \text{[Equation 21]}$$

Next, the evaluation data in the respective evaluation regions for each individual are made into models as the factor multiple of the reference value like the equation 22 using the factor α (j) and the reference value f''(i).

$$f''(i,j) = \alpha(j)f''(i) + \varepsilon(i,j,k) \qquad \text{[Equation 22]}$$

where ε (i, j, k) is the remainder.

Next, α (j) are estimated from the data f''(i, j) for the individuals (j) using the least squares method so that the sum of the squares of the remainders shown in the equation 23 is minimized.

[Equation 23]

$$\min_{\alpha(j)} \sum \sum \varepsilon(i,j,k)^2$$

However, when the evaluation values F(j) of the individuals are given by the weighted sum of N(j) of the evaluation data α (j)f''(i), the evaluation values F(j) are given with the equation 24.

$$F(j) = \sum_i N(i)\alpha(j)f''(i) = \alpha(j)\sum_i N(i)N(i) \qquad \text{[Equation 24]}$$

As is clear from the equation 24, since the comparison of F(j) is simply the same as the comparison of α (j), the α (j) may be used as the evaluation value. It is determined that the greater the α (j), the higher the evaluation.

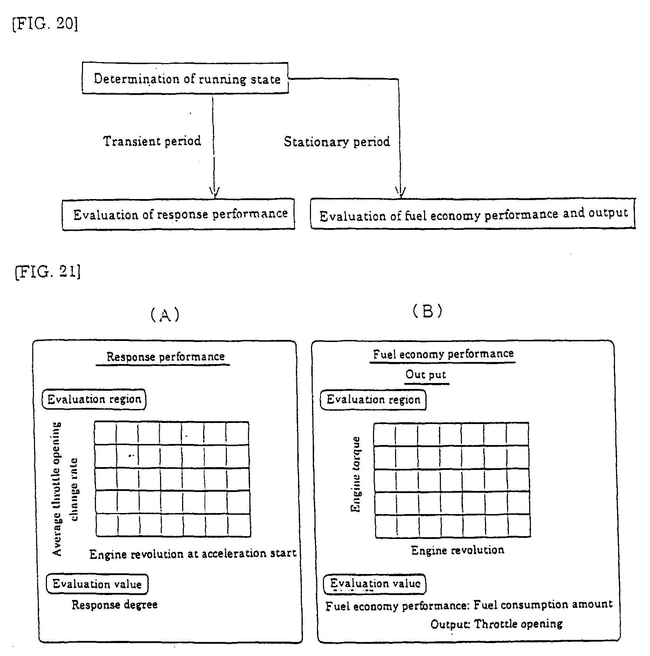

Next, an example of applying the evaluation method of this invention to an engine will be described. When the engine characteristics are evaluated on-line, individuals for response performance, fuel economy performance, and output are respectively independent, different modules which cannot be compared with each other. Namely, as shown in FIG. 20, evaluation is made for each module: After determining the running state, each module is evaluated for the response performance if the running state is transient or for the fuel economy performance and the output if the running state is stationary.

FIG. 21(A) is for use in evaluating the response performance, with the evaluation region consisting of acceleration start engine revolution and average throttle opening, and with the response degree being used as the evaluation value. A local response degree is a value of an engine revolution changing rate during a period in which the throttle opening changing rate is a positive value divided by an average throttle opening changing rate. The greater the amount of change in the engine revolution relative to the amount of change in the throttle opening per unit time, the greater the value of the response degree. The characteristic of the engine revolution catching up the throttle opening, or the response performance is greatly affected with the air-fuel ratio during acceleration. The air-fuel ratio during acceleration is determined by the manner of operating the throttle under the same condition of the acceleration start engine revolution. Therefore, the evaluation region is subdivided by the throttle opening changing rate which depends on the manner of throttle operation and by the acceleration start engine revolution, namely the running pattern which depends on the manner of throttle operation.

FIG. 21(B) is for use in evaluating the fuel economy performance and the output. The evaluation region consists of engine torque and revolution for both of the evaluations. The local evaluation values are respectively the fuel consumption amount and the throttle opening degree. The less the fuel consumption amount per unit time, the better the fuel economy performance under the same conditions of the engine torque and engine revolution. Similarly, the smaller the throttle opening, the better the output.

In the above-described embodiment, if the operation state is transient, the response performance is evaluated. If the operation state is stationary, the fuel economy performance and the output are evaluated. However, any other performances may be evaluated as long as is it possible to evaluate the dynamic characteristic in the transient state and the static characteristic in the stationary state.

As is clear from the above description, with the invention of claim 1, subdividing the evaluation conditions of individuals and classifying the data for evaluation make it possible to compare the evaluation data of similar acquisition conditions under the same conditions, and to improve evaluation accuracy of individuals having characteristics with their control results appearing in different operation regions.

With the invention of claims 2 and 5, calculating the evaluation values using models makes it possible to evaluate data contained in an evaluation region that does not have all the data for individuals, and to evolve with a small number of data.

With the invention of claims 3 and 4, determining the average value and variance for the area including the outskirts when calculating the reference value of the model makes it possible to increase the number of individuals related to the calculation of reference value, and to improve the accuracy of the reference value.

With the invention of claims 6 and 7, making uniform the degrees of contribution to the evaluation regions makes it possible to weight the evaluation region according to the user's characteristic, and to evolve the region emphatically.

With invention of claims 8 through 16, applying the evaluation method to engines or the like makes it possible to realize highly accurate, objective evaluation according to the preference, skill and condition of the user; use environment, operation state, etc.

## Claims

1. An evaluation method for a hereditary algorithm, **characterized in that** the evaluation conditions of individuals are subdivided and that the data for evaluation is classified.

2. Evaluation method according to claim 1, **characterized in that** data for evaluation is classified into subdivided evaluation regions and evaluation values are objectively calculated when individuals in a hereditary algorithm are evaluated in subjects to be controlled in which control results turn up in a plural number of operation statuses.

3. Evaluation method according to claim 1 or 2, **characterized in that** an evaluation value of an individual is replaced with a model of a factor relative to a reference value by the use of the data for evaluation classified into the evaluation regions.

4. Evaluation method according to claim 3, **characterized in that** the average of data contained in an area including the outskirts of the region to which the data for evaluation belong is used as the reference value for calculating the evaluation value model-wise.

5. Evaluation method according to claim 3, **characterized in that** the average value and variance of data contained in an area including the outskirts of a region to which the data for evaluation belong are used as the reference values for calculating the evaluation value model-wise.

6. Evaluation method according to at least one of the preceding claims 3 to 5, **characterized in that** when the evaluation value is calculated model-wise, a value determined by the least squares method from the factor, relative to the reference value, of each data for evaluation is made the evaluation value for the individual.

7. Evaluation method according to at least one of the preceding claims 3 to 6, **characterized in that** concerning the data for evaluation classified into the evaluation regions, the data for evaluation are converted so that each evaluation region has the same degree of contribution to the evaluation value.

8. Evaluation method according to claim 7, **characterized in that** concerning the data for evaluation classified into the evaluation regions, the data for evaluation are converted so that each evaluation region has the same average value and/or variance value.

9. Evaluation method according to at least one of the preceding claims 1 to 8, **characterized in that** the subject to be controlled is an engine, an electric motor, an air-conditioner, a refrigerator, or a robot.

10. Evaluation method according to claim 9, **characterized in that** at least one of user's preference, user's skill and condition, environment for use, and operating condition is used as parameters for subdividing the evaluation region.

11. Evaluation method according to claim 9 or 10, **characterized in that** different evaluation methods for the subjects to be controlled are used for dynamic characteristics in a transient period and for static characteristics in a stationary period.

12. Evaluation method according to claim 11, **characterized in that** the dynamic characteristic is evaluated with response performance.

13. Evaluation method according to claim 12, **characterized in that** the subject to be controlled is an engine and that when individuals for the response characteristic are evaluated the evaluation region is subdivided with a running pattern dependent on the manner of operating the throttle.

14. Evaluation method according to claim 13, **characterized in that** a local evaluation value for the response performance is obtained by dividing the change rate in engine revolution by the change rate in average throttle opening degree.

15. Evaluation method according to claim 11, **characterized in that** the subject to be controlled is an engine and that the static characteristic is evaluated with at least one of fuel economy performance and output power.

16. Evaluation method according to claim 15, **characterized in that** fuel injection amount per unit time in the evaluation region is used as the local evaluation value for the fuel economy performance.

17. Evaluation method according to claim 15, **characterized in that** throttle opening in the evaluation region is used as the local evaluation value for the output power.

[FIG. 1]

EP 0 969 385 A2

Evolution adaptive layer

Evolution correction amount

Control output

External information

Evaluation system

Evaluation of user's characteristic; evaluation of characteristic of state of use

Evolution-adaptation system

Control module 1

Cooperate/ Contradict

Control module 2

Control module n

External memory means

·IC card
·floppy disk

Learning layer

Learning

Basic correction amount

Storage, reading

Control system 1 for learning

Control system 2 for learning

Reflection layer

Equation

Neural network

Subsumption architecture

Map

Fuzzy rule

Basic manipulation amount

[FIG. 2]

```
                    ( Start . )
                        |
                        v
Step a    | Initial state: Learning layer output is zero. |
                        |
                        v
Step b    | Evolution adaptive layer changes according to
          | characteristics of user and/or state of use.    |
                        |
                        v
Step c    | Acquisition of currently most preferable
          | at least one control module.                    |
                        |
                        v
Step d .  | Control module of evolution adaptive layer is fixed to currently
          | most preferable one.  In control system for learning in
          | learning layer, input-output relation of the control system for
          | execution of learning layer and input-output relation of
          | evolution adaptive layer are learned together.  Here, control
          | with reflection, learning, and evolution adaptive layers. |
                        |
                        v
Step e    | Learning is finished when difference between learning neural
          | network and control output becomes smaller than threshold
          | value.
          |       Learning control system  → Execution control system
          |       Execution control system  → Learning control system |
                        |
                        v
Step f    | Control with reflection layer and execution control system
          | of learning layer.                               |
                        |
                        v
Step g    | Evaluate displacement of control rule of learning layer by
          | operating evolution adaptive layer at constant time intervals. |

No displacement                                        Displacement
                                                       present
```

[FIG. 3]

[FIG. 4]

EP 0 969 385 A2

Feedback information

Gear position

Engine revolution
Throttle opening
(Throttle opening change rate)

**Evolution adaptive layer**

**Evaluation system**

| Determine running state index P and acceleration priority rate $\gamma$ | Preliminary evaluation process |
| Overall evaluation process |

**Evolution-adaptation system**

Fuel consumption module

Control module

Power module

Evolution correction amount

+ Manipulation amount

**Learning layer**

Fuel consumption module

Learning neural network

Execution neural network

Control module

Learning neural network

Execution neural network

Basic correction amount

Power module

Learning neural network

Execution neural network

**Reflection layer**

Fuel injection model

Intake air vacuum
Atmospheric pressure
Intake air temperature
Cooling water temperature

Basic manipulation amount

·············· In evolution   ··············· In learning ———— Subject to be controlled in operation

[FIG. 5]

(a)

E/G
Revolution        Prolong with low gears

10000

1    2    3    4    5    6
Gear position

(b)

E/G
Revolution        Shift up early

10000

1    2    3    4    5    6
Gear position

[FIG. 6]

Normal running (a)

Engine revolution        All gears used
                         · (Running state index: large)

10000

1    2    3    4    5    6
Gear position

In traffic jam (b)

1st, 2nd and 3rd gears used
only during the period
(Running state index: slightly large)

1    2    3    4    5    6
Gear position

Highway (c)

5th and 6th gears used
only during the period
(Running state index: small)

1    2    3    4    5    6
Gear position

[FIG. 7]

Maximum revolution in 1st gear

Maximum revolution in 2nd gear

. . .

Maximum revolution in 6th gear

Running state index: P

[FIG. 8]

Acceleration priority rate
$r$          (a)

1

$r_1$

0          P1

Running state index: P

With a short time for reaching
maximum revolution

With a long time for reaching
maximum revolution

(b)

$r_1 + \Delta r$

0          P1

(c)

$r_1 - \Delta r$

0          P1

[FIG. 9]

i 1          h 1

Normalized engine revolution
( 0 ~ 1 )

i 2          h 2          o 1

Normalized throttle opening
( 0 ~ 1 )

Fuel injection
correction amount

i 3

Bias          Bias

h 3

[FIG. 10]

EP 0 969 385 A2

20

Output evaluation value

O

Initial state

Fuel economy evaluation value

Evolution of
fuel consumption module

Output evaluation value

Improvement in
fuel economy

O ———→ O

Fuel economy evaluation value

Evolution of power module

Output
evaluation
value

O

Improvement in output

O

Fuel economy evaluation value

Output
evaluation
value

O

Change according to
user's preference

O

O

Evolution of control module

Fuel economy evaluation value

[FIG. 11]

( Start )

Step 1

Generate nine individuals n (n = 1 · 9) by coding coupling factors of neural network of fuel economy module.

Step 2

Determine neural network output x of fuel economy module using coupling factor of individual a(n).

Step 3

Determine economy module output yf form neural network output using equation (1).

Step 4

Determine evaluation-adaptation layer output (Correction value Ya' for evaluation ) from fuel economy module output yf, acceleration module output ya (fixed), and control module output OR using equation (2).

Step 5

Air-fuel ratio control using Ya and Yb

Step 6

Calculate evaluation valve

Step 7

Is preliminary evaluation process repeated for a specified number of cycles?  N

Step 8

Overall evaluation process

Step 9

Has a specified number of generations elapsed?  Y

Step 10

Choose some parent individuals from nine individuals.
· Roulette type choosing method
· Best preservation strategy

Step 11

Generate next generation comprising nine child individuals.
· Crossing.
· Mutation
· Zero output

Step 12

Choose best (optimum) individual from nine individuals.

Step 13

Fix the neural network of the fuel economy module with the coupling factor of the optimum individual.

Go to the learning module of the learning control module of the learning layer.

[FIG. 12]

[FIG. 13]

Running pattern    Time

a(1)  a(2)  a(3)  a(4)  a(5)  a(6)  a(7)  a(8)   a(9) a(1)  a(2)  a(3)  a(4)

One cycle

[FIG. 14]

Number of generations

[FIG. 15]

```
                    ┌──────────────────────────┐
                    │ Acquire data for evaluation │
                    └──────────────────────────┘
                                 ↓
 Step 1   ┌──────────────────────────────────────────────┐
          │ Classify evaluation data to evaluation regions. │
          └──────────────────────────────────────────────┘
                                 ↓
 Step 2      ┌────────────────────────────────────────┐
             │ Calculate reference value of the model. │
             └────────────────────────────────────────┘
                                 ↓
 Step 3         ┌──────────────────────────┐
                │ Convert evaluation data.  │
                └──────────────────────────┘
                                 ↓
 Step 4   ┌──────────────────────────────────────────────────┐
          │ Determine evaluation values from factors relative │
          │ to the reference value of the data for evaluation. │
          └──────────────────────────────────────────────────┘
```

[FIG. 16]

Evaluation region

Set: $U(i)$

[FIG. 17]

Normalization of average value

Frequency

Data set in region i2                    Data set in region i1

Average value : $f(i_1)$  Average value:$f'(i_1) = f''(i_1)$  Average value : $f(i_1)$
$\doteq 1$

Evaluation data value

[FIG. 18]

Frequency                Normalization of variance

Region i1

Variance: $c''_1 = c''_1 = 1$

Variance:
$c'_1$

Region i2

Variance:
$c'_1$

Average value : $f'(i_1) = f'(i_1)$
$= f''(i_1) = f''(i_1)$
$\doteq 1$

Evaluation data value

[FIG. 19]

Evaluation data value/Average value          Estimation of $\alpha(j)$ with least squares

$\alpha(j_1)$

$\alpha(j_1)$

Evaluation data

25

[FIG. 20]

Determination of running state

Transient period

Stationary period

Evaluation of response performance

Evaluation of fuel economy performance and output

[FIG. 21]

(A)

Response performance

Evaluation region

Average throttle opening change rate

Engine revolution at acceleration start

Evaluation value

Response degree

(B)

Fuel economy performance

Out put

Evaluation region

Engine torque

Engine revolution

Evaluation value

Fuel economy performance: Fuel consumption amount

Output: Throttle opening